# EUROPEAN PATENT APPLICATION

(11) **EP 2 428 346 A2**
(43) Date of publication of application: **14.03.2012**
(21) Application number: 11180933.1
(22) Date of filing: 12.09.2011
(51) Int. Cl.: B29C 45/57, B29D 11/00, B29C 33/30, G02B 3/00, G02B 26/10

(54) **Resin casting mold, molded resin product, optical element, optical scanning device, and image forming apparatus**

(30) Priority: 13.09.2010 JP 2010203943
(71) Applicant: Ricoh Company, Ltd., Tokyo 143-8555 (JP)
(72) Inventor: Ohhashi, Takamichi, Tokyo 143-8555 (JP); Hayashi, Eiichi, Tokyo 143-8555 (JP); Hirano, AKIO, Tokyo 143-8555 (JP); Takahashi, Go, Tokyo 143-8555 (JP); Hatashita, Chieko, Tokyo 143-8555 (JP)
(74) Representative: Leeming, John Gerard

(57) **Abstract**

A resin casting mold includes a cavity having a predetermined shape and is used for producing a molded resin product by transferring the shape of a surface on the cavity side of a mold member forming the cavity to a resin material. The surface on the cavity side of the mold member includes first and second surfaces facing each other in a first direction and each of the first and second surfaces have a predetermined surface shape, the mold member includes an insert member which forms a part of a third surface different from any one of the first and second surfaces of the surface on the cavity side and which is slidable in a second direction perpendicular to the first direction, at least one cross-sectional shape of the cavity satisfies a relation h < A < H where A is the length of the insert member in the first direction, h is a spacing in the first direction between a portion of the first surface closest to the insert member and a portion of the second surface closet to the insert member, and H is the length in the first direction on the third surface, and the insert member is disposed so as to include a region having the spacing h in the first direction.

## Description

The present invention relates to a resin casting mold, a molded resin product, an optical element, an optical scanning device, and an image forming apparatus. More specifically, the present invention relates to a resin casting mold for molding a resin into a desired shape, a molded resin product produced with the resin casting mold, an optical element formed of a resin, and an optical scanning device and an image forming apparatus each including the optical element.

A molded resin product is produced by using a metal mold having a cavity similar in shape to the molded resin product, and by inserting a base resin material into the cavity or by injecting a melted resin into the cavity to fill the cavity with the melted resin. Thus, the molded resin product can be mass-produced at a low cost even when the product has a special shape.

The molded resin products come in a variety of shapes depending on the purposes of use. Some molded resin products have an uneven thickness and a shape having a thick portion and a thin portion, whereas some molded resin products require transferability of the shape of a metal mold to the product with high accuracy.

For example, an optical element such as a lens or a prism requires accuracy in the shape of an optical surface and high accuracy in regard to birefringence occurring therein. Therefore, although such optical elements have hitherto typically been formed of a glass, along with a demand for a reduction in the cost of the products, such optical elements are increasingly transiting to be produced with a resin.

In particular, in a deflector-side scanning lens used in a laser printer or the like, in order to accommodate a plurality of functions into a minimal number of elements, the optical surface of such a lens is often designed into a complex aspheric shape as well as a spherical shape.

In molding a molded resin product, during the step of cooling and solidifying a melted resin in a cavity of a metal mold, it is desirable to maintain the pressure and the temperature of resin in the cavity to be uniform in order to mold the molded resin product into a desired shape with high accuracy. However, in a molded product having a complex and uneven thickness and shape, the cooling speed and the solidifying speed vary depending on the positions, leading to internal stress when demolding the molded product. This may result in the molded product that has chipped off a piece of the body by being pulled by the metal mold or in occurrence of demolding defects. When the molded product is demolded, a deformation such as warpage may occur. Birefringence is also likely to occur due to internal strain.

In order to reduce the internal strain, it is necessary to perform so-called low-pressure injection molding which is an injection molding with the pressure of a resin suppressed to be low. However, in the low-pressure injection molding, because the amount of the filled resin is small relative to the cavity volume, the resin is likely to be separated from the metal mold during cooling (hereinafter, this separation is also referred to as "sink mark"). Thus, the transfer accuracy of the shape of the metal mold to a resin product is impaired.

For example, Japanese Patent No. 3034721 discloses a low-pressure injection molding method that prevents the occurrence of sink marks on the transfer surface.

Japanese Patent No. 3512595 discloses a method of molding molded resin products in which a slidable interchangeable mold (hereinafter referred to as a "movable interchangeable mold") which configures the cavity of a metal mold slides during molding so as to separate the resin on a non-transfer surface.

Japanese Patent Application Laid-open No. 2000-329908 discloses a molded resin product in which a sink mark is induced at an arbitrary position on a rib or an intersection of a transfer surface and the rib.

The demand for molded resin products has increased in recent years. However, with the injection molding method disclosed in Japanese Patent No. 3034721, the method for producing molded resin products disclosed in Japanese Patent No. 3512595, and the molded resin product disclosed in Japanese Patent Application Laid-open No. 2000-329908, it is difficult to manufacture molded resin products having shape accuracy as demanded with a favorable yield.

The present invention has been made in view of the above problems, and a first object of the present invention is to provide a resin casting mold capable of stably producing molded resin products having excellent shape accuracy.

A second object of the present invention is to provide molded resin products and optical elements having excellent shape accuracy at a low cost.

A third object of the present invention is to provide an optical scanning device capable of achieving cost reduction without decreasing scanning accuracy.

A fourth object of the present invention is to provide an image forming apparatus capable of achieving cost reduction without decreasing image quality.

According to an aspect of the present invention, there is provided a resin casting mold that has a cavity having a predetermined shape and is used for producing a molded resin product by transferring the shape of the cavity to a resin material. The resin casting mold includes a mold member that form the cavity. The mold member includes first to third surfaces on the cavity side, the first and second surfaces facing each other in a first direction and each having a predetermined surface shape. The mold member includes an insert member that forms a part of the third surface and that is slidable in a second direction perpendicular to the first direction. At least one cross-sectional shape of the cavity satisfies a relation h < A < H where A is a length of the insert member in the first direction, h is a spacing in the first direction between a portion of the first surface closest to the insert member and a portion of the second surface closet to the insert member, and H is a length of the third surface in the first direction, and the insert member is disposed so as to include a region having the spacing h in the first direction.

According to another aspect of the present invention, there is provided a molded resin product produced using a resin casting mold which includes a mold member that forms a cavity including first and second surfaces facing each other in a first direction and a third surface and which includes an insert member that forms a part of the third surface and that is slidable in a second direction perpendicular to the first direction. The molded resin product including: a first molding surface to which the first surface of the resin casting mold is transferred; a second molding surface to which the second surface of the resin casting mold is transferred; and a third molding surface to which a part of the third surface of the resin casting mold is transferred and which includes an imperfect transfer portion. The imperfect transfer portion has a smaller area than the third molding surface, in at least one cross-sectional shape, a portion of the first molding surface closest to the third molding surface and a portion of the second molding surface closest to the third molding surface are positioned between ends of the imperfect transfer portion in a direction along which the first molding surface faces the second molding surface.

According to still another aspect of the present invention, there is provided an optical element produced using a resin casting mold which includes a cavity including first and second surfaces facing each other in a first direction and a third surface and which includes an insert member that forms a part of the third surface and that is slidable in a second direction perpendicular to the first direction. The optical element includes a first molding surface to which the first surface of the resin casting mold is transferred, a second molding surface to which the second surface of the resin casting mold is transferred, and a third molding surface to which a part of the third surface of the resin casting mold is transferred and which includes an imperfect transfer portion. The imperfect transfer portion has a smaller area than the third molding surface, in at least one cross-sectional shape, a portion of the first molding surface closest to the third molding surface and a portion of the second molding surface closest to the third molding surface are positioned between ends of the imperfect transfer portion in a direction along which the first molding surface faces the second molding surface.

The above and other objects, features, advantages and technical and industrial significance of this invention will be better understood by reading the following detailed description of presently preferred embodiments of the invention, when considered in connection with the accompanying drawings, in which:
Fig. 1 is a diagram illustrating a schematic configuration of a color printer according to an embodiment of the present invention;
Fig. 2 is a first diagram illustrating a schematic configuration of an optical scanning device;
Fig. 3 is a second diagram illustrating a schematic configuration of the optical scanning device;
Fig. 4 is a third diagram illustrating a schematic configuration of the optical scanning device;
Fig. 5 is a fourth diagram illustrating a schematic configuration of the optical scanning device;
Fig. 6 is a diagram illustrating a deflector-side scanning lens 2105c;
Fig. 7 is a first diagram illustrating a cross-sectional shape of the deflector-side scanning lens 2105c;
Fig. 8 is a second diagram illustrating a cross-sectional shape of the deflector-side scanning lens 2105c;
Fig. 9 is a diagram illustrating a configuration of a metal mold 10;
Fig. 10 is a diagram illustrating an interchangeable mold 11a;
Fig. 11 is a diagram illustrating an interchangeable mold 11b;
Fig. 12 is a diagram illustrating a side wall member 12a;
Fig. 13 is a diagram illustrating a side wall member 12b;
Figs. 14A and 14B are diagrams illustrating a movable interchangeable mold 13;
Fig. 15 is a diagram illustrating the size and position of the movable interchangeable mold 13;
Fig. 16 is a diagram illustrating a state in which the cavity of the metal mold 10 is filled with a resin;
Fig. 17 is a diagram illustrating a state in which the movable interchangeable mold 13 is slid;
Fig. 18 is a diagram illustrating a state in which a sink mark has occurred;
Fig. 19 is a diagram illustrating a configuration (A < h < H) of a metal mold 50 as a first comparative example;
Fig. 20 is a first diagram illustrating a problem in using the metal mold 50;
Fig. 21 is a second diagram illustrating a problem in using the metal mold 50;
Fig. 22 is a diagram illustrating a configuration (h < A = H) of a metal mold 60 as a second comparative example;
Fig. 23 is a diagram illustrating a problem in using the metal mold 60;
Fig. 24 is a diagram illustrating a configuration (h < H < A) of a metal mold 70 as a comparative example 3.
Fig. 25 is a diagram illustrating a problem in using the metal mold 70;
Fig. 26 is a diagram illustrating the cross-sectional shape of an imaging-side scanning lens 2107c;
Fig. 27 is a diagram illustrating a configuration of a metal mold 20;
Fig. 28 is a diagram illustrating an interchangeable mold 21 a;
Fig. 29 is a diagram illustrating an interchangeable mold 21b;
Fig. 30 is a diagram illustrating a side wall member 22a;
Fig. 31 is a diagram illustrating a side wall member 22b;
Figs. 32A and 32B are diagrams illustrating a movable interchangeable mold 23a;
Figs. 33A and 33B are diagrams illustrating a movable interchangeable mold 23b;
Fig. 34 is a diagram illustrating the size and position of the movable interchangeable molds 23a and 23b;
Fig. 35 is a diagram illustrating a state in which the cavity of the metal mold 20 is filled with a resin;
Fig. 36 is a diagram illustrating a state in which the movable interchangeable molds 23a and 23b are slid; and
Fig. 37 is a diagram illustrating a state in which sink marks has occurred.

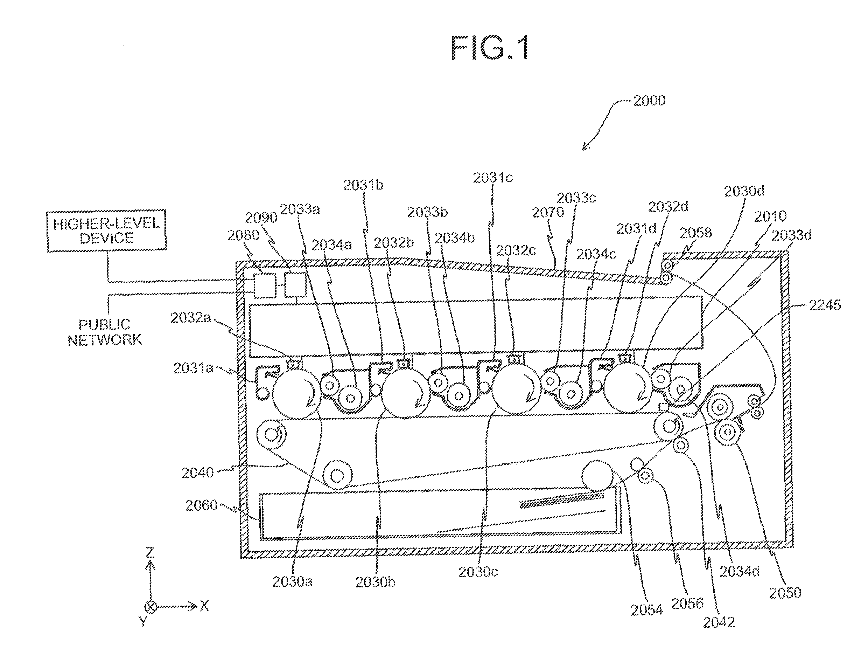

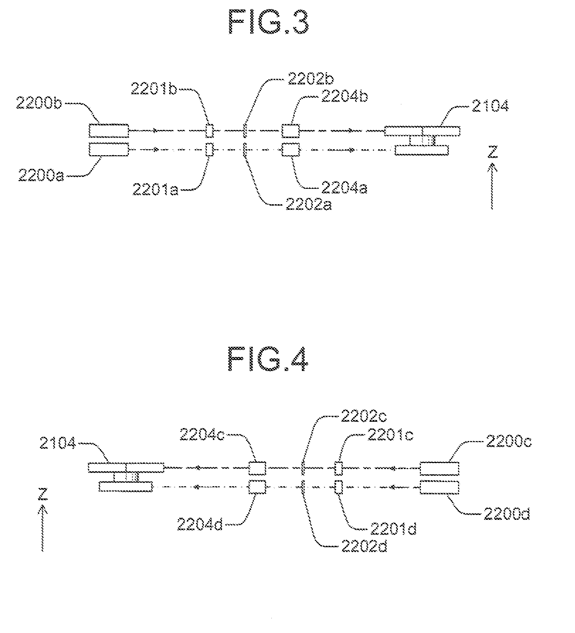

Hereinafter, an embodiment of the present invention will be described with reference to Figs. 1 to 37. Fig. 1 illustrates a schematic configuration of a color printer 2000 as an image forming apparatus according to an embodiment.

The color printer 2000 is a tandem-type multicolor printer that forms a full-color image by superimposing four (black, cyan, magenta, and yellow) images on each other. The color printer 2000 includes an optical scanning device 2010, four photosensitive elements (2030a, 2030b, 2030c, and 2030d), four cleaning units (2031a, 2031b, 2031c, and 2031d), four charging units (2032a, 2032b, 2032c, and 2032d), four developing rollers (2033a, 2033b, 2033c, and 2033d), four toner cartridges (2034a, 2034b, 2034c, and 2034d), a transfer belt 2040, a transfer roller 2042, a fixing roller 2050, a paper feed roller 2054, a registration roller pair 2056, an ejecting roller 2058, a paper feed tray 2060, a discharge tray 2070, a communication control device 2080, a printer control device 2090 that controls the units and devices listed above.

In the following, an explanation is given based on a three-dimensional cartesian coordinate system with XYZ axes, in which the longitudinal direction of each of the photosensitive elements is in the Y-axis direction and the direction along which the four photosensitive elements are arranged is in the X-axis direction.

The communication control device 2080 controls bidirectional communication between a higher-level device (for example, a PC) that is connected through a network or the like and an information apparatus (for example, a facsimile machine) that is connected through a public network. The communication control device 2080 transmits received information to the printer control device 2090.

The printer control device 2090 includes a central processing unit (CPU), a read-only memory (ROM) in which computer programs described in codes readable by the CPU and various data used when executing the computer programs are stored, a random access memory (RAM) which is a working memory, an AD converter that converts analog data into digital data, and the like. The printer control device 2090 controls the respective units in accordance with a request from the higher-level device and the information apparatus and transmits image information from the higher-level device and the information apparatus to the optical scanning device 2010.

The photosensitive element 2030a, the charging unit 2032a, the developing roller 2033a, the toner cartridge 2034a, and the cleaning unit 2031a are used as a set and configure an image forming station (which may be hereinafter referred as "K station" for the sake of convenience) that forms images in black.

The photosensitive element 2030b, the charging unit 2032b, the developing roller 2033b, the toner cartridge 2034b, and the cleaning unit 2031b are used as a set, and configure an image forming station (which may be hereinafter the station may be referred as a "C station" for the sake of convenience) that forms images in cyan.

The photosensitive element 2030c, the charging unit 2032c, the developing roller 2033c, the toner cartridge 2034c, and the cleaning unit 2031c are used as a set and configure an image forming station (which may be hereinafter the station may be referred as an "M station" for the sake of convenience) that forms images in magenta.

The photosensitive element 2030d, the charging unit 2032d, the developing roller 2033d, the toner cartridge 2034d, and the cleaning unit 2031d are used as a set and configure an image forming station (which may be hereinafter the station may be referred as a "Y station" for the sake of convenience) that forms images in yellow.

Each of the photosensitive elements has a photosensitive layer on a surface. That is, the surface of each of the photosensitive elements is a surface to be scanned. Each photosensitive element is rotated in the direction indicated by the arrow within the plane illustrated in Fig. 1 by a rotating mechanism (not shown).

Each charging device uniformly charges the surface of the corresponding photosensitive element.

The optical scanning device 2010 illuminates the surface of the corresponding charged photosensitive element with a modulated light beam of each color based on the multicolor image information (black, cyan, magenta, and yellow image information) output from the printer control device 2090. Accordingly, a portion of the surface of each photosensitive element that is illuminated with light is discharged, and a latent image corresponding to the image information is formed on the surface of each photosensitive element. Here, the formed latent image is moved toward the corresponding developing roller by the rotation of the photosensitive element. The configuration of the optical scanning device 2010 will be described later.

The toner cartridge 2034a stores black toner, and the toner is supplied to the developing roller 2033a. The toner cartridge 2034b stores cyan toner, and the toner is supplied to the developing roller 2033b. The toner cartridge 2034c stores magenta toner, and the toner is supplied to the developing roller 2033c. The toner cartridge 2034d stores yellow toner, and the toner is supplied to the developing roller 2033d.

In accordance with the rotation of each developing roller, the toner supplied from the toner cartridge is applied to the surface of the developing roller so as to form a thin and uniform layer of toner. When the toner on the surface of each developing roller comes into contact with the surface of the corresponding photosensitive element, the toner is transferred and attached only to the portion of the surface of the corresponding photosensitive element that is illuminated with the light. That is, each developing roller attaches toner to the latent image formed on the surface of the corresponding photosensitive element, and thus forms a visible image. Here, the image to which toner is attached (toner image) is then moved, in association of the rotation of the photosensitive element, toward the transfer belt 2040.

The toner images of the colors of yellow, magenta, cyan, and black are sequentially transferred onto the transfer belt 2040 at predetermined timing and superimposed on each other, whereby a multicolor image is formed on the transfer belt 2040.

The paper feed tray 2060 stores recording sheets. The paper feed roller 2054 is disposed near the paper feed tray 2060. The paper feed roller 2054 picks up recording sheets one by one from the paper feed tray 2060 and conveys each of the recording sheets to the registration roller pair 2056. The registration roller pair 2056 conveys the recording sheet toward the gap between the transfer belt 2040 and the transfer roller 2042 at predetermined timing. In this way, the color image on the transfer belt 2040 is transferred to the recording sheet. Here, the recording sheet to which the color image has been transferred is conveyed to the fixing roller 2050.

By the fixing roller 2050, heat and pressure are applied to the recording sheet, whereby the toner is fixed on the recording sheet. Here, the recording sheet on which the toner is fixed is conveyed to the discharge tray 2070 via the ejecting rollers 2058 and is then sequentially stacked on the discharge tray 2070.

Each cleaning unit removes toner (residual toner) that remains on the surface of the corresponding photosensitive element. The surface of the photosensitive element from which the residual toner is removed returns to the position facing the corresponding charging device.

Next, the configuration of the optical scanning device 2010 will be described.

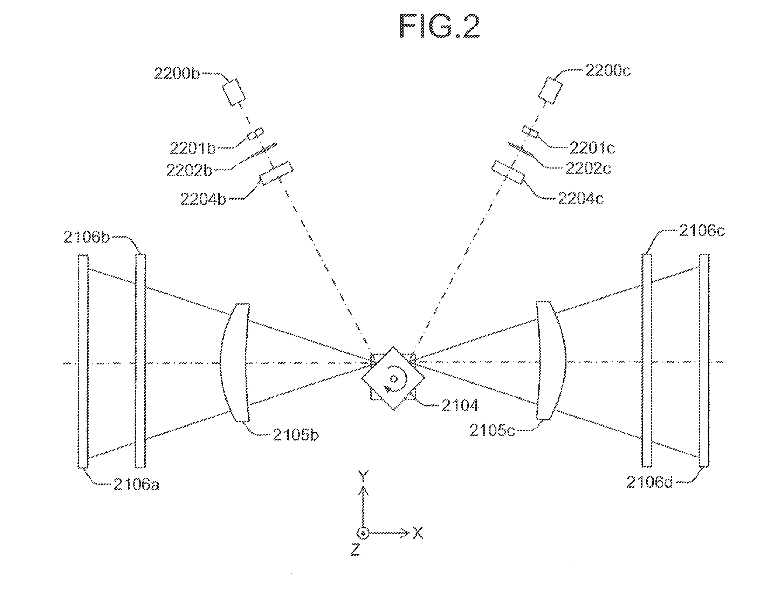

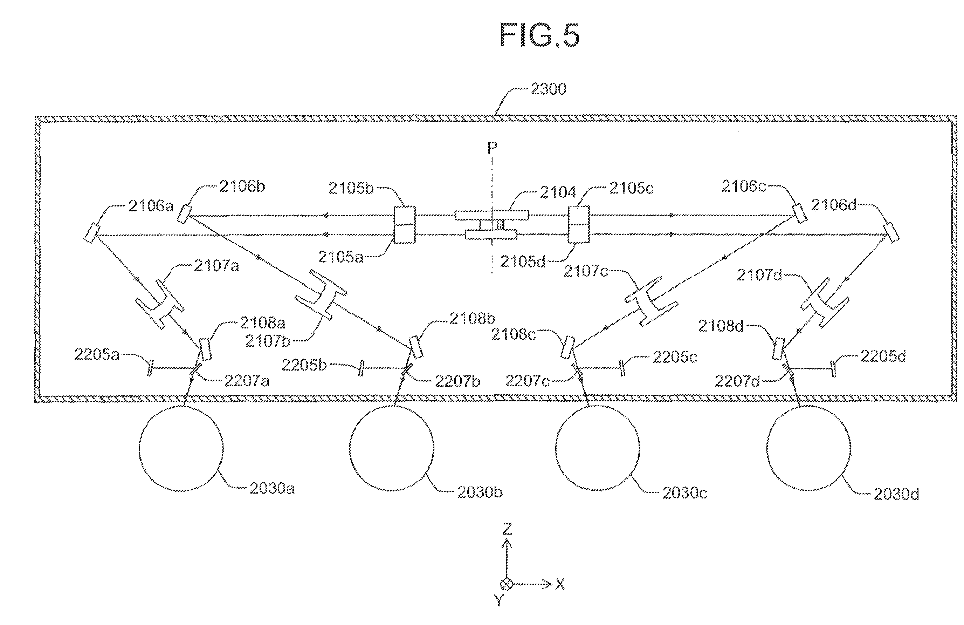

The optical scanning device 2010 includes, as illustrated in Figs. 2 to 5 as an example, four light sources (2200a, 2200b, 2200c, and 2200d), four coupling lenses (2201a, 2201b, 2201c, and 2201d), four aperture plates (2202a, 2202b, 2202c, and 2202d), four cylindrical lenses (2204a, 2204b, 2204c, and 2204d), a polygon mirror 2104 and its axis of rotation P, four deflector-side scanning lenses (2105a, 2105b, 2105c, and 2105d), eight reflecting mirrors (2106a, 2106b, 2106c, 2106d, 2108a, 2108b, 2108c, and 2108d), four imaging-side scanning lenses (2107a, 2107b, 2107c, and 2107d), four light detection sensors (2205a, 2205b, 2205c, and 2205d), four light detection mirrors (2207a, 2207b, 2207c, and 2207d), and a scanning control device (not shown). These components are assembled to predetermined positions of an optical housing 2300 (not shown in Figs. 2 to 4, see Fig. 5).

For the sake of convenience, in the following explanation, a direction that corresponds to the main-scanning direction is described as a "main-scanning corresponding direction" and a direction that corresponds to the sub-scanning direction is described as a "sub-scanning corresponding direction."

The light sources 2200b and 2200c are disposed to be apart from each other in the X-axis direction. The light source 2200a is disposed on the -Z side of the light source 2200b. Moreover, the light source 2200d is disposed on the -Z side of the light source 2200c.

The coupling lens 2201a is disposed on the optical path of a light beam emitted from the light source 2200a and converts the light beam into a substantially parallel beam of light.

The coupling lens 2201b is disposed on the optical path of a light beam emitted from the light source 2200b and converts the light beam into a substantially parallel beam of light.

The coupling lens 2201c is disposed on the optical path of a light beam emitted from the light source 2200c and converts the light beam into a substantially parallel beam of light.

The coupling lens 2201d is disposed on the optical path of a light beam emitted from the light source 2200d and converts the light beam into a substantially parallel beam of light.

The aperture plate 2202a has an aperture and shapes the beam of light that has passed through the coupling lens 2201a.

The aperture plate 2202b has an aperture and shapes the beam of light that has passed through the coupling lens 2201b.

The aperture plate 2202c has an aperture and shapes the beam of light that has passed through the coupling lens 2201c.

The aperture plate 2202d has an aperture and shapes the beam of light that has passed through the coupling lens 2201d.

The cylindrical lens 2204a causes the beam of light that has passed through the aperture of the aperture plate 2202a to form an image in the vicinity of a deflecting reflective surface of the polygon mirror 2104 in the Z-axis direction.

The cylindrical lens 2204b causes the beam of light that has passed through the aperture of the aperture plate 2202b to form an image in the vicinity of the deflecting reflective surface of the polygon mirror 2104 in the Z-axis direction.

The cylindrical lens 2204c causes the beam of light that has passed through the aperture of the aperture plate 2202c to form an image in the vicinity of a deflecting reflective surface of the polygon mirror 2104 in the Z-axis direction.

The cylindrical lens 2204d causes the beam of light that has passed through the aperture of the aperture plate 2202d to form an image in the vicinity of the deflecting reflective surface of the polygon mirror 2104 in the Z-axis direction.

The polygon mirror 2104 includes a first four-sided mirror and a second four-sided mirror with each mirror having a deflecting reflective surface. Furthermore, the polygon mirror 2104 is configured such that the second four-sided mirror is placed on top of the first four-sided mirror. The first (lower) four-sided mirror is disposed so as to deflect each of the beam of light having passed through the cylindrical lens 2204a and the beam of light having passed through the cylindrical lens 2204d. The second (upper) four-sided mirror is disposed so as to deflect each of the beam of light having passed through the cylindrical lens 2204b and the beam of light having passed through the cylindrical lens 2204c.

In this example, the beam of light having passed through the cylindrical lens 2204a and the beam of light having passed through the cylindrical lens 2204b are deflected toward the -X side of the polygon mirror 2104, and the beam of light having passed through the cylindrical lens 2204c and the beam of light having passed through the cylindrical lens 2204d are deflected toward the +X side of the polygon mirror 2104.

Each deflector-side scanning lens is designed to have a non-circular surface shape such that, the spot of light moves, in association with the rotation of the polygon mirror 2104, on the surface of the corresponding photosensitive element at a constant speed in the main-scanning direction.

The deflector-side scanning lenses 2105a and 2105b are disposed on the -X side of the polygon mirror 2104, and the deflector-side scanning lenses 2105c and 2105d are disposed on the +X side of the polygon mirror 2104.

The deflector-side scanning lens 2105b is disposed to be stacked on top of the deflector-side scanning lens 2105a in the Z-axis direction, so that the deflector-side scanning lens 2105a faces the first four-sided mirror and the deflector-side scanning lens 2105b faces the second four-sided mirror. Moreover, the deflector-side scanning lens 2105c is disposed to be stacked on top of the deflector-side scanning lens 2105d in the Z-axis direction, so that the deflector-side scanning lens 2105c faces the second four-sided mirror and the deflector-side scanning lens 2105d faces the first four-sided mirror.

The beam of light, having passed through the cylindrical lens 2204a is deflected by the polygon mirror 2104 to irradiate, via the deflector-side scanning lens 2105a, the reflecting mirror 2106a, the imaging-side scanning lens 2107a, and the reflecting mirror 2108a, the photosensitive element 2030a, on which a spot of light is formed. The spot of light moves in the longitudinal direction of the photosensitive element 2030a in accordance with the rotation of the polygon mirror 2104. That is, the spot of light scans the photosensitive element 2030a. The moving direction of the spot of light in this case is "the main-scanning direction" on the photosensitive element 2030a, and the rotating direction of the photosensitive element 2030a is "the sub-scanning direction" on the photosensitive element 2030a.

Moreover, the beam of light, having passed through the cylindrical lens 2204b is deflected by the polygon mirror 2104 to irradiate, via the deflector-side scanning lens 2105b, the reflecting mirror 2106b, the imaging-side scanning lens 2107b, and the reflecting mirror 2108b, and then illuminates the photosensitive element 2030b, on which a spot of light is formed. The spot of light moves in the longitudinal direction of the photosensitive element 2030b in accordance with the rotation of the polygon mirror 2104. That is, the spot of light scans the photosensitive element 2030b. The moving direction of the spot of light in this case is "the main-scanning direction" on the photosensitive element 2030b, and the rotating direction of the photosensitive element 2030b is "the sub-scanning direction" on the photosensitive element 2030b.

Furthermore, the beam of light, having passed through the cylindrical lens 2204c is deflected by the polygon mirror 2104 to irradiate, via the deflector-side scanning lens 2105c, the reflecting mirror 2106c, the imaging-side scanning lens 2107c, and the reflecting mirror 2108c, the photosensitive element 2030c, on which a spot of light is formed. The spot of light moves in the longitudinal direction of the photosensitive element 2030c in accordance with the rotation of the polygon mirror 2104. Namely, the spot of light scans the photosensitive element 2030c. The moving direction of the spot of light in this case is "the main-scanning direction" on the photosensitive element 2030c, and the rotating direction of the photosensitive element 2030c is "the sub-scanning direction" on the photosensitive element 2030c.

The beam of light, having passed through the cylindrical lens 2204d is deflected by the polygon mirror 2104 to irradiate, via the deflector-side scanning lens 2105d, the reflecting mirror 2106d, the imaging-side scanning lens 2107d, and the reflecting mirror 2108d, the photosensitive element 2030d, on which a spot of light is formed. The spot of light moves in the longitudinal direction of the photosensitive element 2030d in accordance with the rotation of the polygon mirror 2104. That is, the spot of light scans the photosensitive element 2030d. The moving direction of the spot of light in this case is "the main-scanning direction" on the photosensitive element 2030d, and the rotating direction of the photosensitive element 2030d is "the sub-scanning direction" on the photosensitive element 2030d.

A scanning region, on the surface of each photosensitive element, in which image information is written in the main-scanning direction, is referred to as an "effective scanning region," an "image forming region," or an "effective image region."

The optical system disposed on the optical path between the polygon mirror 2104 and each of photosensitive elements is also referred to as an "optical scanning system." In the present embodiment, the optical scanning system of the K station is configured by the deflector-side scanning lens 2105a, the imaging-side scanning lens 2107a, and the two reflecting mirrors (2106a and 2108a). Moreover, the optical scanning system of the C station is configured by the deflector-side scanning lens 2105b, the imaging-side scanning lens 2107b, and the two reflecting mirrors (2106b and 2108b). Furthermore, the optical scanning system of the M station is configured by the deflector-side scanning lens 2105c, the imaging-side scanning lens 2107c, and the two reflecting mirrors (2106c and 2108c). In addition, the optical scanning system of the Y station is configured by the deflector-side scanning lens 2105d, the imaging-side scanning lens 2107d, and the two reflecting mirrors (2106d and 2108d).

The light detection sensor 2205a receives, from the light detection mirror 2207a, a part of the beam of light, before writing, that has been deflected by the polygon mirror 2104 and has passed through the optical scanning system of the K station.

The light detection sensor 2205b receives, from the light detection mirror 2207b, a part of the beam of light, before writing, that has been deflected by the polygon mirror 2104 and has passed through the optical scanning system of the C station.

The light detection sensor 2205c receives, from the light detection mirror 2207c, a part of the beam of light, before writing, that has been deflected by the polygon mirror 2104 and has passed through the optical scanning system of the M station.

The light detection sensor 2205d receives, from the light detection mirror 2207d, a part of the beam of light, before writing, that has been deflected by the polygon mirror 2104 and has passed through the optical scanning system of the Y station.

Each of the light detection sensors outputs a signal (photoelectric conversion signal) corresponding to the amount of received light.

The scanning control device detects scanning start timing at the corresponding photosensitive element based on the output signals of the respective light detection sensors.

Each of the deflector-side scanning lenses is an optical element formed of a resin which is produced by injection molding using a metal mold of the same shape. In the following explanation, the deflector-side scanning lens 2105c will be described as a representative of the deflector-side scanning lenses 2105a to 2105d.

Examples of the resin include polymethyl methacrylate, polycarbonate, amorphous polyolefin, cyclo-olefin copolymer, and the like. In the present embodiment, cyclo-olefin copolymer (trade name: ZEONEX, produced by Nippon Zeon Corporation) is used as an example.

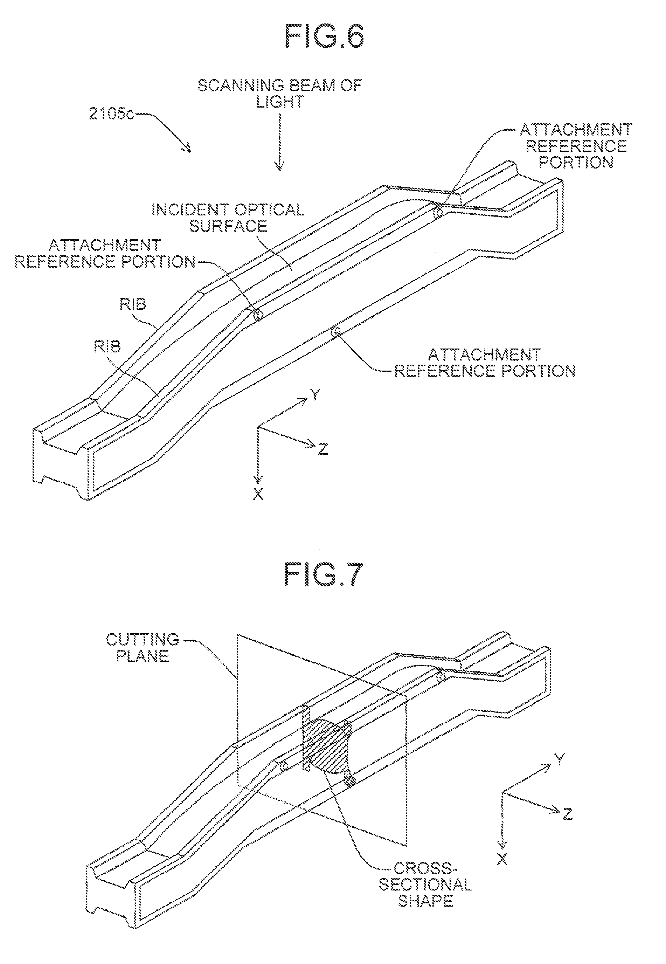

The deflector-side scanning lens 2105c includes, as illustrated in Fig. 6 as an example, a body portion including two optical surfaces (an optical surface of an incident side and an optical surface of an exit side), ribs for reinforcing the body portion, and attachment reference portions. In the following description, for the sake of convenience, the optical surface of the incident side will be referred to as an "incident optical surface" and the optical surface of the exit side will be referred to as an "exit optical surface". Moreover, a surface of the deflector-side scanning lens 2105c on the +Z side will be sometimes referred to as a "side surface R," and the surface on the - Z side will be sometimes referred to as a "side surface L."

Here, the length of each optical surface in the lateral direction is 6 mm, and a region having a width of 4 mm at the central portion is an effective region. The length of each optical surface in the longitudinal direction is 100 mm. Moreover, the body portion has an uneven thickness shape in which the thickness at the central portion is 10 mm and the thickness at the end portions is 5 mm.

The ribs are formed at the edge portions on the +Z and -Z sides of each optical surface and have a width of 2 mm and a height from the optical surface of 2 mm.

The attachment reference portions are formed on rib on the +Z side at three different positions in the Y-axis direction (having different Y coordinates).

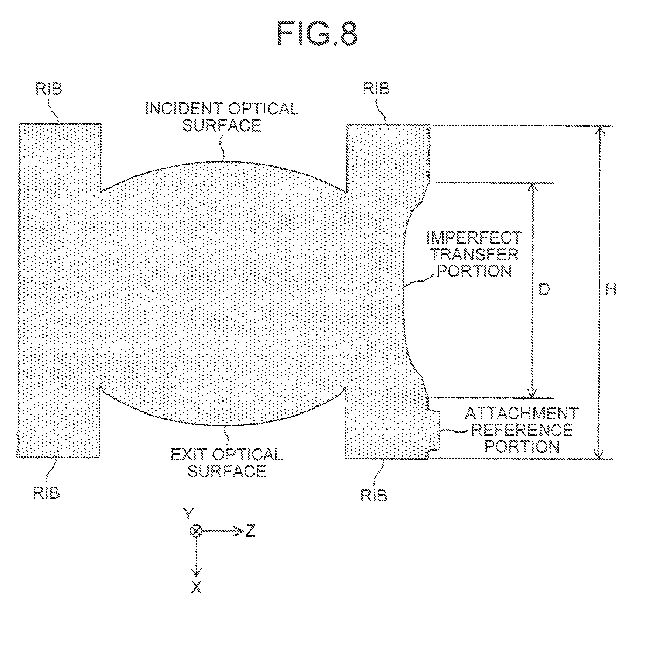

The shape of a cross section (see Fig. 7) which passes through the attachment reference portion positioned at the center in the Y-axis direction and which is perpendicular to the Y axis is illustrated in Fig. 8.

A part of the side surface R is a so-called "imperfect transfer portion." The imperfect transfer portion is a portion in which a sink mark is induced during molding. In this example, an end portion of the imperfect transfer portion on the -X side is positioned at a distance of 1 mm toward the +X side from an end portion of the side surface R on the -X side. Moreover, an end portion of the imperfect transfer portion on the +X side is positioned at a distance of 1 mm toward the -X side from an end portion of the side surface R on the +X side. As described above, the imperfect transfer portion is formed within the plane of the side surface R.

Therefore, at the central portion of the deflector-side scanning lens 2105c in the longitudinal direction, the length H of the side surface R in the X-axis direction is 14 mm, and the length D of the imperfect transfer portion is 12 mm.

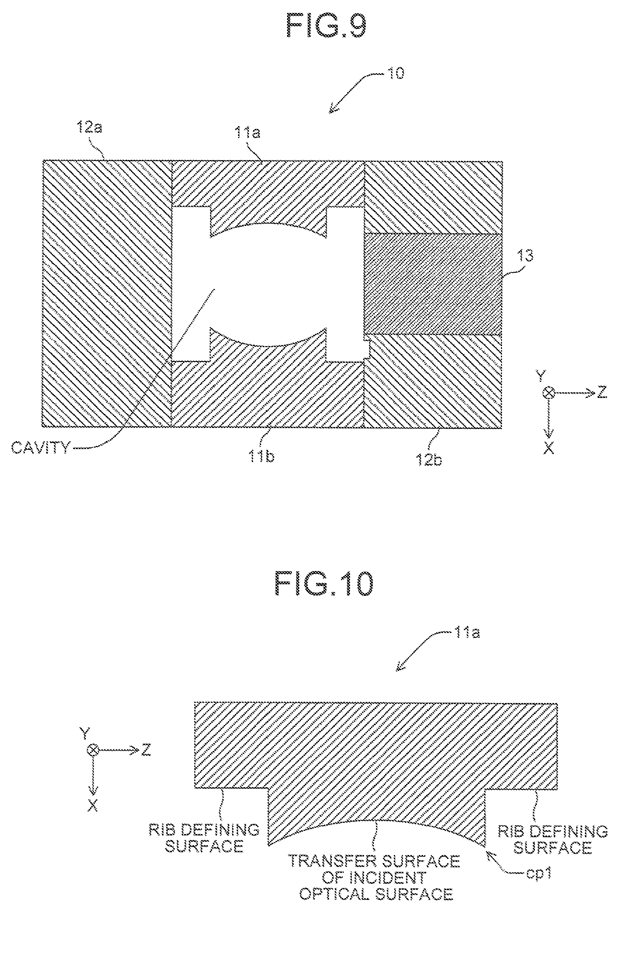

A metal mold 10 used in producing the deflector-side scanning lens 2105c by injection molding is illustrated in Fig. 9 as an example. The metal mold 10 has a cavity at an inner side thereof which is similar in shape to the shape of the deflector-side scanning lens 2105c.

The metal mold 10 includes two interchangeable molds (11a and 11b), two side wall members (12a and 12b), and a movable interchangeable mold 13.

The interchangeable mold 11a includes a transfer surface of the incident optical surface and a rib defining surface that defines the thickness of the rib and the end portions of the rib on the -X side (see Fig. 10). Here, an end portion on the +Z side of the transfer surface of the incident optical surface is denoted by cp1.

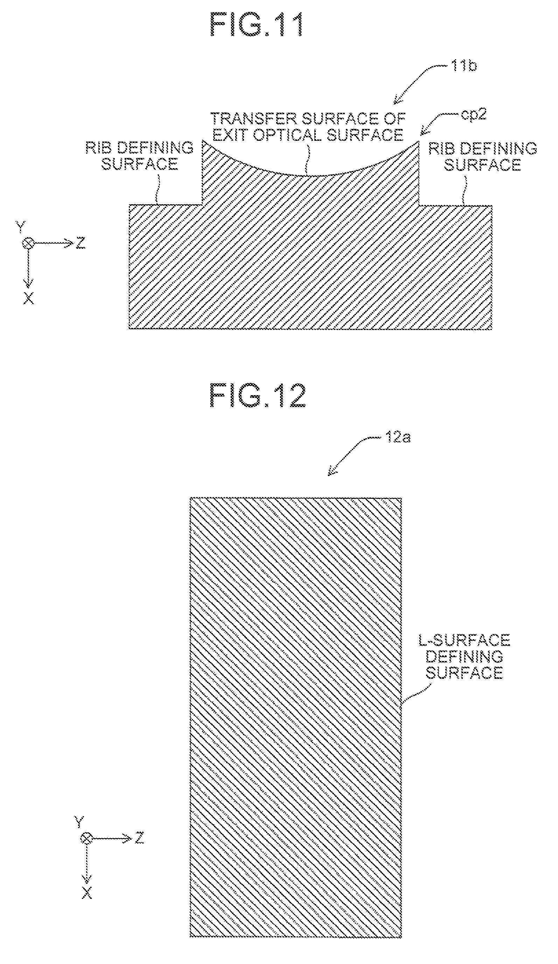

The interchangeable mold 11b includes a transfer surface of the exit optical surface and a rib defining surface that defines the thickness of the rib and the end portions of the rib on the +X side (see Fig. 11). Here, an end portion on the +Z side of the transfer surface of the exit optical surface is denoted by cp2.

The two interchangeable molds (11a and 11b) are disposed so that respective transfer surfaces face each other with a gap corresponding to the distance (thickness) between the incident optical surface and the exit optical surface of the deflector-side scanning lens 2105c in the X-axis direction. In this example, the gap h between cp1 and cp2 in the X-axis direction is 10 mm.

The side wall member 12a is disposed on the -Z side of the two interchangeable molds (11a and 11b) and includes an L-surface defining surface that defines the side surface L (see Fig. 12).

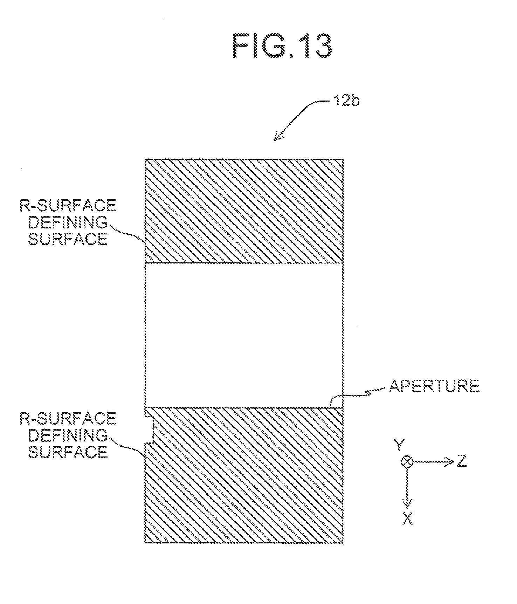

The side wall member 12b is disposed on the +Z side of the two interchangeable molds (11a and 11b) and includes an R-surface defining surface that defines the side surface R (see Fig. 13). Moreover, the side wall member 12b includes an aperture into which the movable interchangeable mold 13 is inserted.

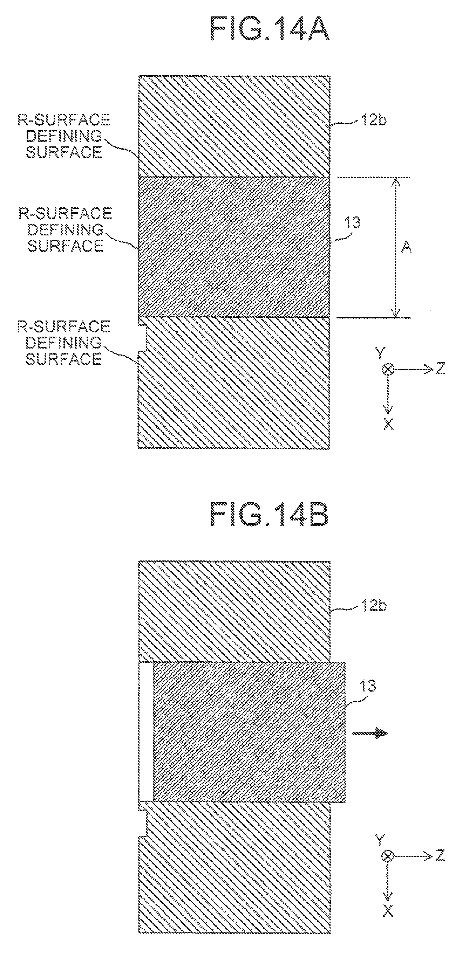

The movable interchangeable mold 13 is inserted into the aperture formed in the side wall member 12b and can be moved (can be slid) relative to the side wall member 12b in the Z-axis direction (see Figs. 14A and 14B).

A surface of the movable interchangeable mold 13 on the -Z side is coated with titanium nitride (TiN) having low adhesion to a resin. The coating is not limited to TiN but may be any one of titanium carbon nitride (TiCN), tungsten carbide (W₂C), and Teflon (registered trademark)-based resin.

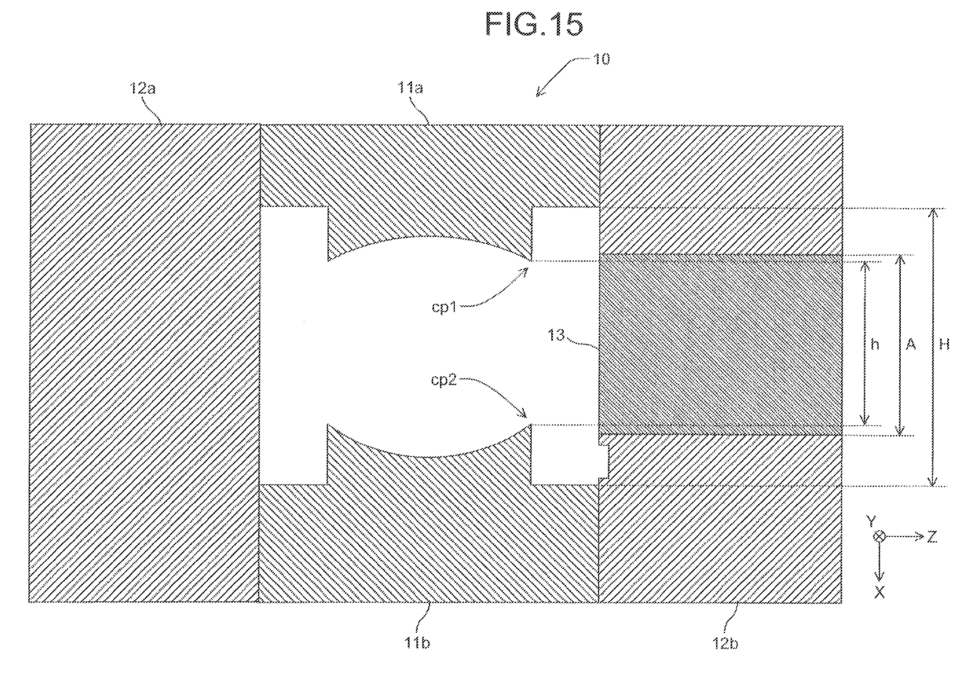

Moreover, in regard to the X-axis direction, the end portion of the movable interchangeable mold 13 on the -X side is positioned closer to the -X side than the cp1, and the end portion of the movable interchangeable mold 13 on the +X side is positioned closer to the +X side than the cp2 (see Fig. 15). That is, when seen from the +Z direction, a space between the cp 1 and the cp2 is covered by the movable interchangeable mold 13.

In this example, the length A of the movable interchangeable mold 13 in the X-axis direction is 12 mm, which is the same as the length D of the imperfect transfer portion. That is, a relation h < A(=D) < H is satisfied.

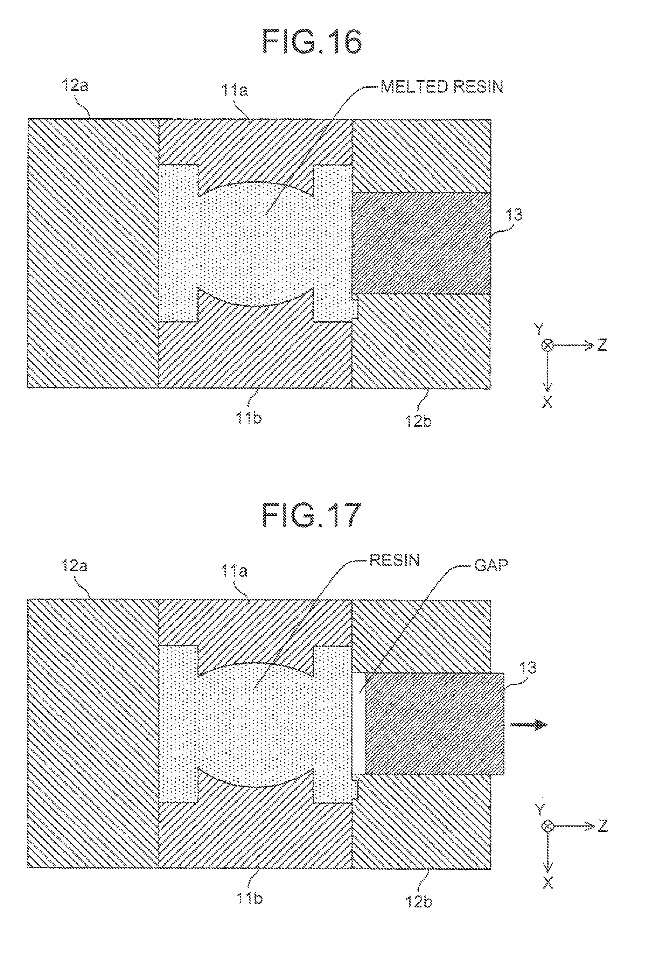

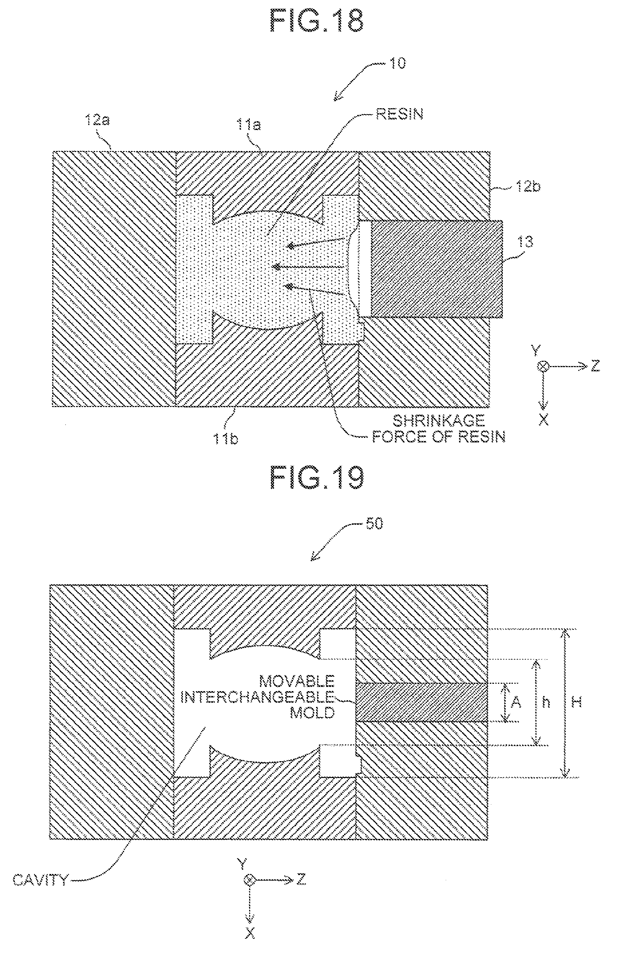

Next, a method of producing the deflector-side scanning lens 2105c using the metal mold 10 will be briefly explained. Here, the metal mold 10 is assumed to be in a state (see Fig. 14A) in which the movable interchangeable mold 13 has not been slid yet.
(1) The metal mold 10 is set on an injection molding machine.
(2) A resin which is melting by being heated at a temperature (200 to 300°C) equal to or higher than the glass transition temperature (Tg) of the resin is injected, by applying pressure (100 to 600 kgf/cm²), to fill in the cavity of the metal mold 10 for which the temperature is maintained at a predetermined temperature (100 to 150°C) equal to or lower than the glass transition temperature (Tg) (see Fig. 16). Because the temperature of the resin approaches the temperature of the metal mold by being injected therein, the resin is cooled to shrink. And the pressure of the resin inside the cavity decreases with time.
(3) When the pressure of the resin inside the cavity reaches predetermined pressure, the movable interchangeable mold 13 is slid toward the +Z side by a predetermined amount of about 1 to 5 mm (see Fig. 17). In this way, a gap is formed between the movable interchangeable mold 13 and the resin. Moreover, the resin near the gap is deformed in response to the predetermined pressure. In this case, when the pressure remaining in the resin is equal to or larger than the atmospheric pressure, the resin near the gap is locally depressurized by having a convex shape in which an edge portion is similar in shape to the R-surface defining surface of the movable interchangeable mold 13. When the pressure remaining in the resin is equal to or smaller than the atmospheric pressure, the resin near the gap locally shrinks to have a concave shape in which an edge portion is similar in shape to the R-surface defining surface of the movable interchangeable mold 13, whereby an imperfect transfer portion is formed (see Fig. 18).
(4) When the temperature of the resin is approximately equal to the temperature of the metal mold 10, the resin is taken out of the metal mold 10.

The deflector-side scanning lens 2105c thus produced has a shape with the central portion of the side surface R being recessed due to shrinkage of the resin. However, it has been possible to form the attachment reference portions into a desired shape at a desired position without being affected by the shrinkage of the resin. It has also been possible to obtain the optical surface having a desired shape.

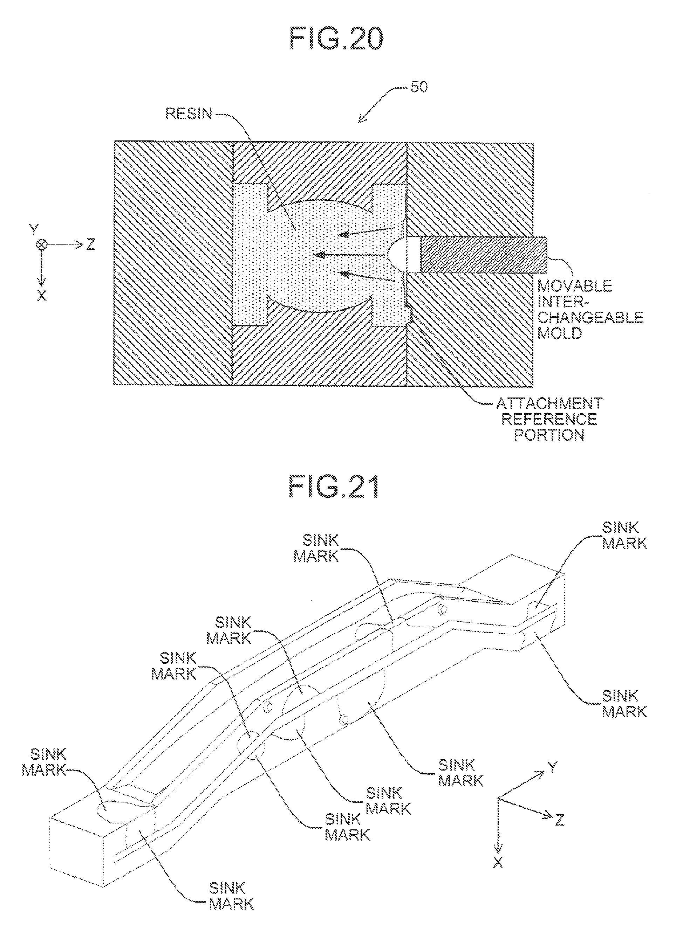

In the meantime, a metal mold 50 is illustrated in Fig. 19 as a first comparative example. The metal mold 50 satisfies a relation A < h < H. It has been known that, when the deflector-side scanning lens 2105c is produced using the metal mold 50, a sink mark occurs in the attachment reference portion as illustrated in Figs. 20 and 21.

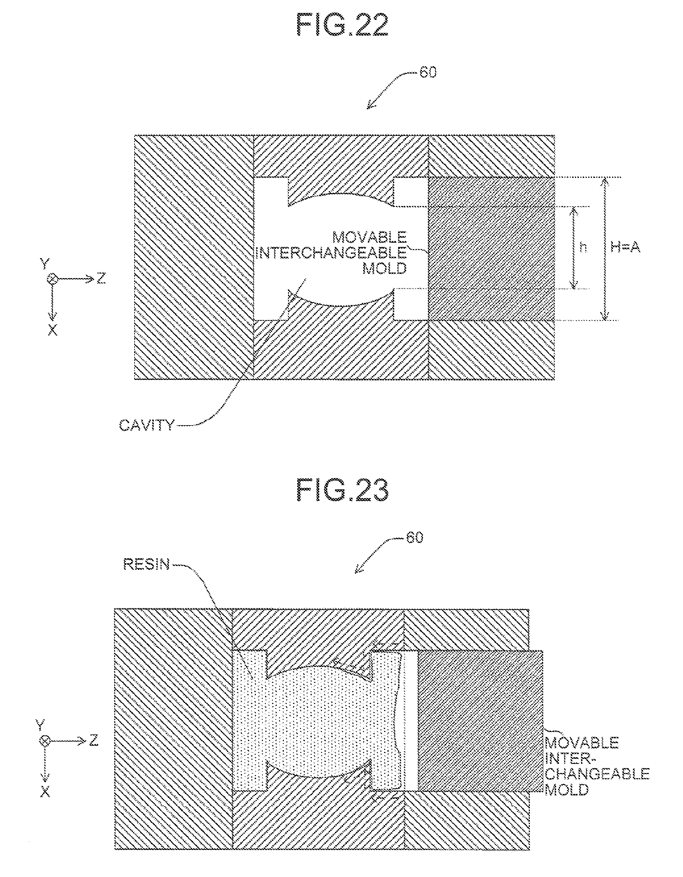

Moreover, a metal mold 60 is illustrated in Fig. 22 as a second comparative example. The metal mold 60 satisfies a relation h < A = H. It has been known that, when the deflector-side scanning lens 2105c is produced using the metal mold 60, a sink mark is formed in a part of the optical surface, as seen in the exemplary illustration in Fig. 23, and therefore, it has been difficult to obtain an optical surface with a desired shape.

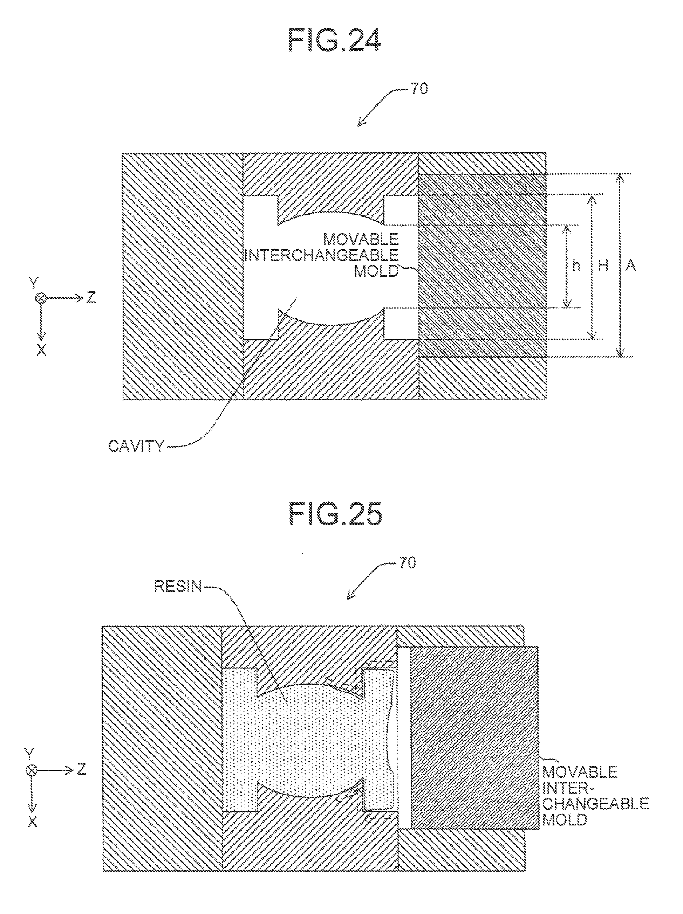

Furthermore, a metal mold 70 is illustrated in Fig. 24 as a third comparative example. The metal mold 70 satisfies a relation h < H < A. It has been known that, when the deflector-side scanning lens 2105c is produced using the metal mold 70, a sink mark is formed in a part of the optical surface, as seen in the exemplary illustration in Fig. 25, and therefore, it has been difficult to obtain an optical surface with a desired shape.

Because the amount of shrinkage of the resin becomes larger at a thicker portion, the amount of shrinkage becomes the largest at the end portions (cp1 and cp2) of the transfer surface, namely a region having the span of length h. In the case of the metal mold 50 in the first comparative example for which h>A holds, the sink marks are not completely absorbed by the region on the front side (-Z side) of the movable interchangeable mold; the sink marks overflow the region. It is difficult to control sink marks across the region and the overflowed sink marks freely spread. As a result, there arises a problem in that a sink mark is formed on the attachment reference portion. Moreover, in the cases of the metal mold 60 of the second comparative example and the metal mold 70 of the third comparative example, respectively, there arise two problems. Namely, (1) because the entire surface of the side surface R is finished as an imperfect transfer portion, it is difficult to secure an attachment reference portion which needs to be transferred with high accuracy. (2) When separating the resin during molding so as to induce a sink mark, because two different kinds of forces, i.e. an adhesion force between the resin and the transfer surface and a demolding force produced by the resin separating perpendicularly from the interchangeable mold, exert on the corner portions of the two interchangeable molds on which the transfer surfaces are formed, separation of the resin on the transfer surface can occur.

In the present embodiment, because the front-side (-Z side) region of the movable interchangeable mold which is a sink-mark inducing region covers the region having the span of length h, the sink mark may not overflow the sink-mark inducing region. That is, the problem occurring in the metal mold 50 of the first comparative example can be prevented in the present embodiment.

Moreover, in the present embodiment, because H>A and a region in which a sink mark does not overflow and which is not the imperfect transfer region can be secured in the side surface R, it is possible to form the attachment reference portion on the side surface R. That is, the problem occurring in the metal mold 50 of the first comparative example and the problem (1) occurring in the metal mold 60 of the second comparative example and the metal mold 70 of the third comparative example do not occur. In addition, when separating the movable interchangeable mold from the resin in order to induce a sink mark during the molding, because the resin at the corner portions of the two interchangeable molds (11a and 11b) does not receive any force, separation of the resin does not occur. Moreover, because overflowing of a sink mark from the sink-mark inducing region does not occur in the present embodiment, the problem (2) occurring in the metal mold 60 of the second comparative example and the metal mold 70 of the third comparative example does not occur in the present embodiment.

Each of the imaging-side scanning lenses is an optical element formed of a resin which is produced by injection molding using a metal mold of the same shape. In the following explanation, the imaging-side scanning lens 2107c will be described as a representative of the imaging-side scanning lens 2107a to 2107d.

Examples of the resin include polymethyl methacrylate, polycarbonate, amorphous polyolefin, cyclo-olefin copolymer, and the like. In the present embodiment, cyclo-olefin copolymer (trade name: ZEONEX, produced by Nippon Zeon Corporation) is used as an example.

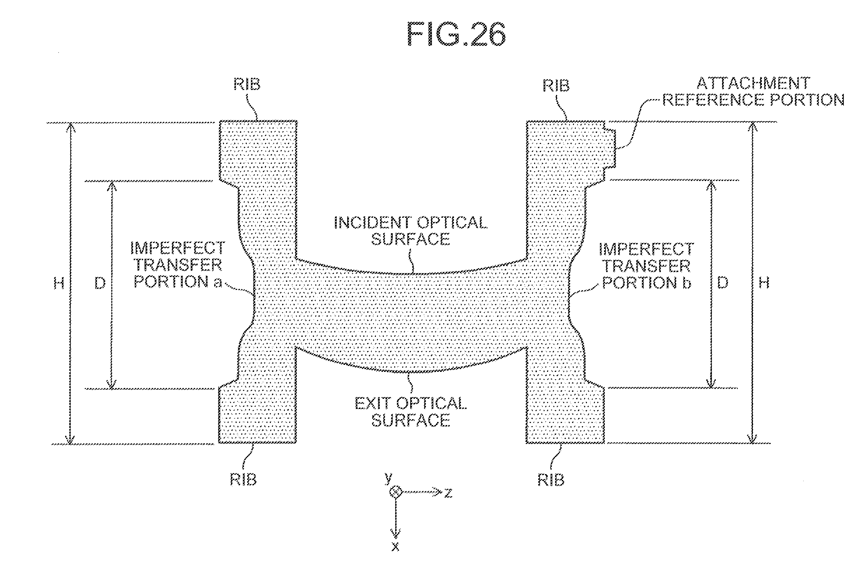

As illustrated in Fig. 26 as an example, the imaging-side scanning lens 2107c includes a body portion including two optical surfaces (incident-side optical surface and exit-side optical surface), ribs for reinforcing the body portion, and attachment reference portions. In this example, the incident direction of a light beam is set to be an x-axis direction, the longitudinal direction is set to be a y-axis direction (identical to the Y-axis direction), and a direction perpendicular to both the x-axis direction and the y-axis direction is set to be a z-axis direction. Moreover, a surface of the imaging-side scanning lens 2107c on the -z side will be sometimes referred to as a "side surface a," and the surface on the +z side will be sometimes referred to as a "side surface b."

Here, the length of each optical surface in the lateral direction is 8 mm, and a region having a width of 6 mm at the central portion is an effective region. The length of each optical surface in the longitudinal direction is 250 mm. Moreover, the body portion has a thickness of 3 mm at the central portion, and the thickness thereof changes continuously from 3 to 5 mm over the entire length.

The ribs are formed on the +z side and -z side in the end portions of each optical surface and have a width of 2 mm and a height of 2 mm measured from the optical surface.

The attachment reference portions are formed on the +z side of each of the ribs at three different positions in the y-axis direction.

The shape of a cross section which passes through the attachment reference portion positioned at the center in the y-axis direction and which is perpendicular to the y axis is illustrated in Fig. 26.

A part of the side surface "a" and a part of the side surface "b" are so-called "imperfect transfer portions". The imperfect transfer portion is a portion in which a sink mark is induced during molding. In the following explanation, for the sake of convenience, an imperfect transfer portion of the side surface "a" will be referred to as an "imperfect transfer portion a" and an imperfect transfer portion of the side surface "b" will be referred to as an "imperfect transfer portion b."

An end portion of the imperfect transfer portion "a" on the -x side is positioned at a distance of 1 mm toward the +x side from an end portion of the side surface "a" on the -x side. Moreover, an end portion of the imperfect transfer portion "a" on the +x side is positioned at a distance of 1 mm toward the -x side from an end portion of the side surface "a" on the +x side. As above, the imperfect transfer portion "a" is formed in the plane of the side surface "a."

An end portion of the imperfect transfer portion "b" on the -x side is positioned at a distance of 1 mm toward the +x side from an end portion of the side surface "b" on the -x side. Moreover, an end portion of the imperfect transfer portion "b" on the +x side is positioned at a distance of 1 mm toward the -x side from an end portion of the side surface "b" on the +x side. As above, the imperfect transfer portion "b" is formed in the plane of the side surface "b."

Therefore, at the central portion of the imaging-side scanning lens 2107c in the longitudinal direction, the length H of the side surfaces "a" and "b" in the x-axis direction is 7 mm, and the length D of each of the imperfect transfer portions is 5 mm.

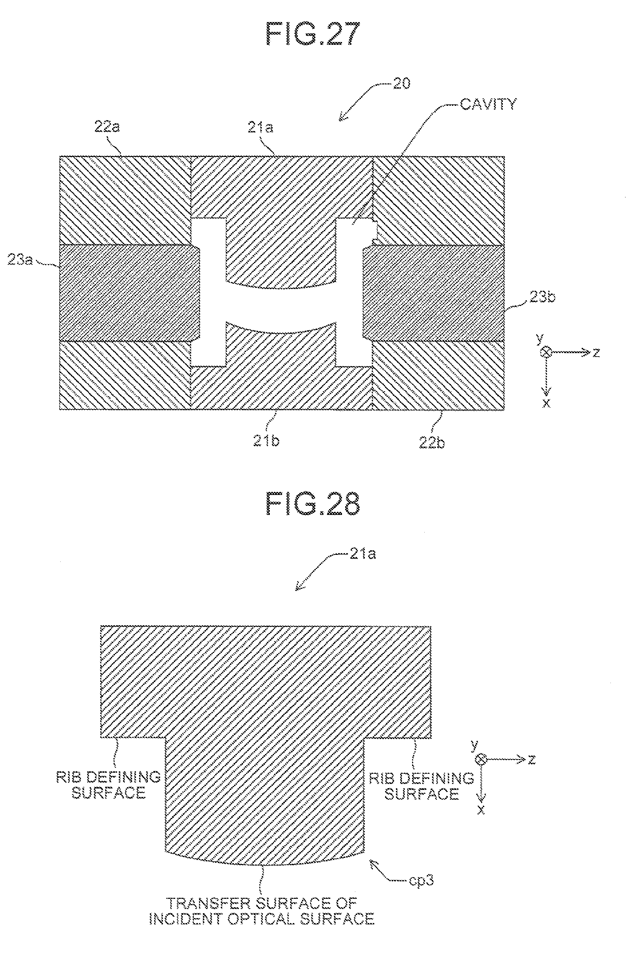

A metal mold 20 used in producing the imaging-side scanning lens 2107c by injection molding is illustrated in Fig. 27 as an example. The metal mold 20 has a cavity at an inner side thereof which is similar in shape to the shape of the imaging-side scanning lens 2107c.

The metal mold 20 includes two interchangeable molds (21a and 21b), two side wall members (22a and 22b), two movable interchangeable molds (23a and 23b), and the like.

The interchangeable mold 21a includes a transfer surface of the incident optical surface and a rib defining surface that defines the thickness of the rib and the end portion of the rib on the -x side (see Fig. 28). Here, an end portion of the transfer surface of the interchangeable mold 21a in the z-axis direction is denoted by cp3.

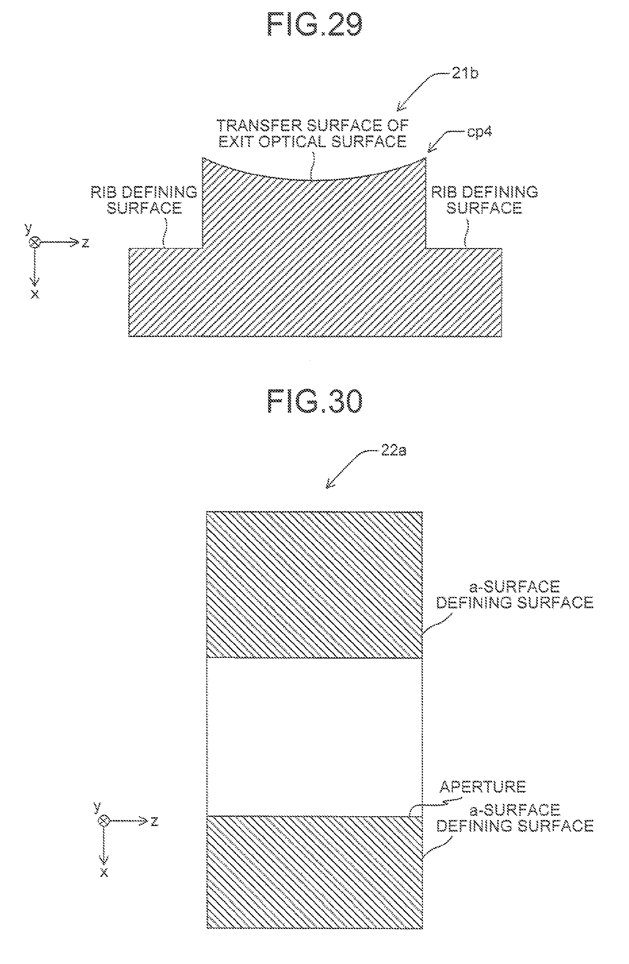

The interchangeable mold 21b includes a transfer surface of the exit optical surface and a rib defining surface that defines the thickness of the rib and the end portion of the rib on the +x side (see Fig. 29). Here, an end portion of the transfer surface of the interchangeable mold 21b in the z-axis direction is denoted by cp4.

The two interchangeable molds (21a and 21b) are disposed so that respective transfer surfaces face each other with a gap corresponding to the distance (thickness) between the incident optical surface and the exit optical surface of the imaging-side scanning lens 2107c in the x-axis direction. In this example, the gap h between cp3 and cp4 in the x-axis direction is 3 mm.

The side wall member 22a is disposed on the -z side of the two interchangeable molds (21a and 21b) and includes an a-surface defining surface that defines the side surface "a" (see

Fig. 30). Moreover, the side wall member 22a includes an aperture into which the movable interchangeable mold 23 a is inserted.

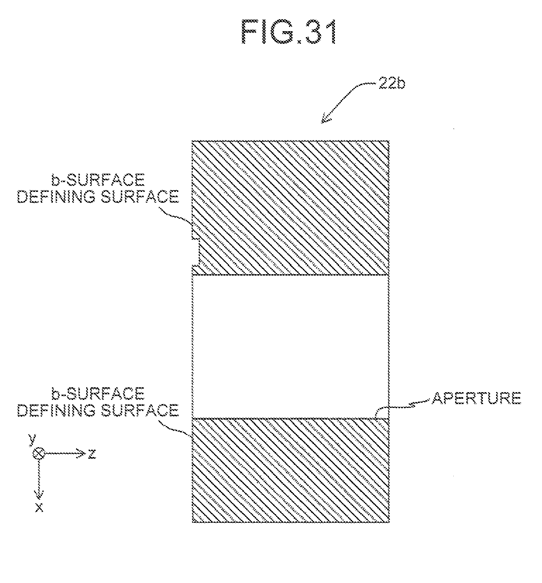

The side wall member 22b is disposed on the +z side of the two interchangeable molds (21a and 21b) and includes a b-surface defining surface that defines the side surface "b" (see Fig. 31). Moreover, the side wall member 22b includes an aperture into which the movable interchangeable mold 23b is inserted.

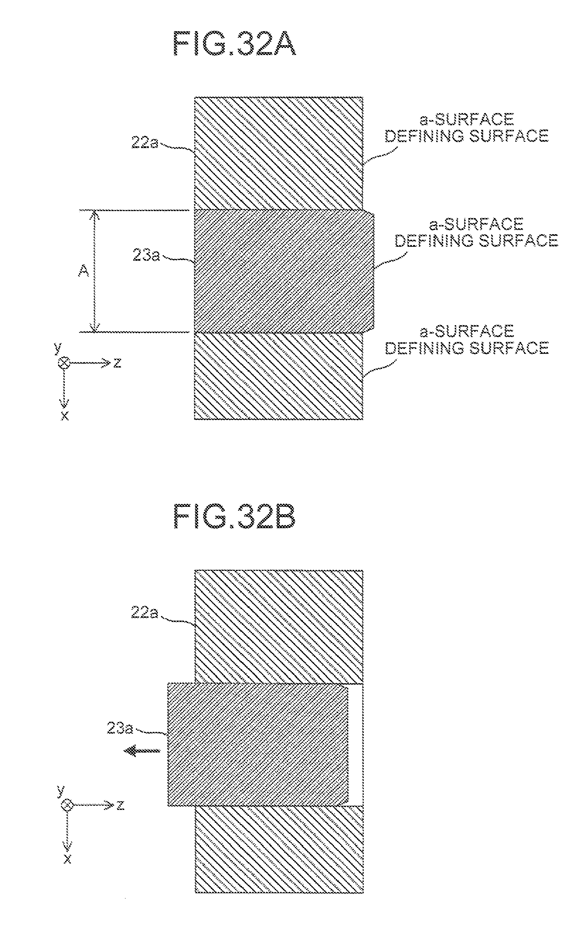

The movable interchangeable mold 23 a is inserted into the aperture formed in the side wall member 22a and can be moved (can be slid) relative to the side wall member 22a in the z-axis direction (see Figs. 32A and 32B).

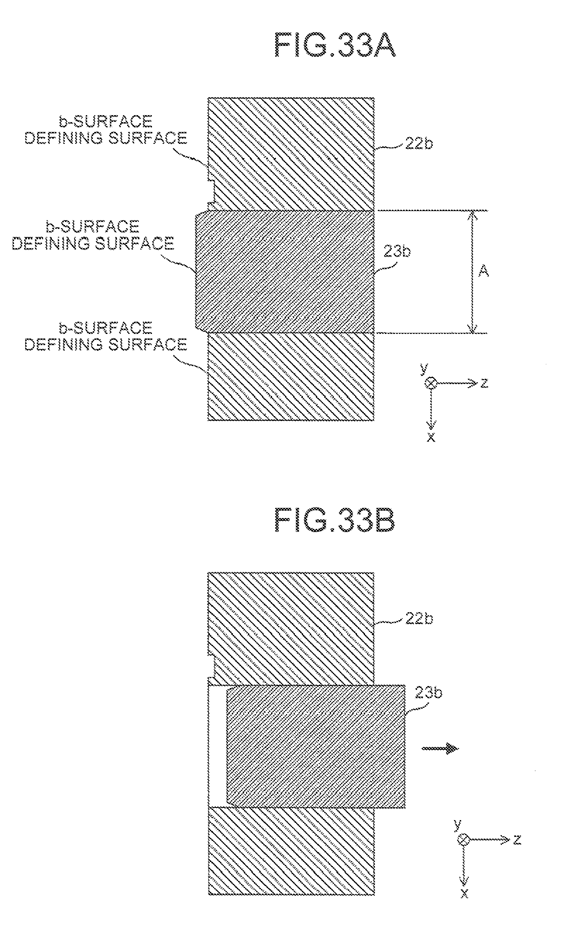

The movable interchangeable mold 23b is inserted into the aperture formed in the side wall member 22b and can be moved (can be slid) relative to the side wall member 22b in the z-axis direction (see Figs. 33A and 33B).

A surface of each movable interchangeable mold on the cavity side is coated with titanium nitride (TiN) having low adhesion to a resin. The coating is not limited to TiN but may be any one of titanium carbon nitride (TiCN), tungsten carbide (W₂C), and Teflon (registered trademark)-based resin.

Moreover, the surface of each movable interchangeable mold on the cavity side has a convex shape that enters into the rib side, and a draft is formed on the side surface.

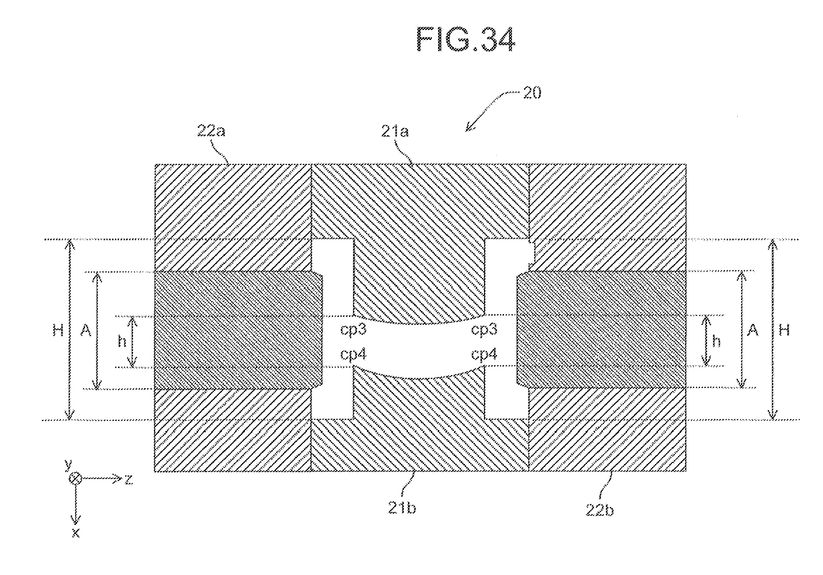

Moreover, in the x-axis direction, the end portion of each movable interchangeable mold on the -x side is positioned closer to the -x side than the cp3, and the end portion of each movable interchangeable mold on the +x side is positioned closer to the +x side than the cp4 (see Fig. 34). That is, when seen from the -z direction, a space between the cp3 and the cp4 is covered by the movable interchangeable mold 23a. Moreover, when seen from the +z direction, the space between the cp3 and the cp4 is covered by the movable interchangeable mold 23b.

In this example, the length A of each movable interchangeable mold in the x-axis direction is 5 mm which is the same as the length D of the imperfect transfer portion. That is, a relation h < A(=D) < H is satisfied.

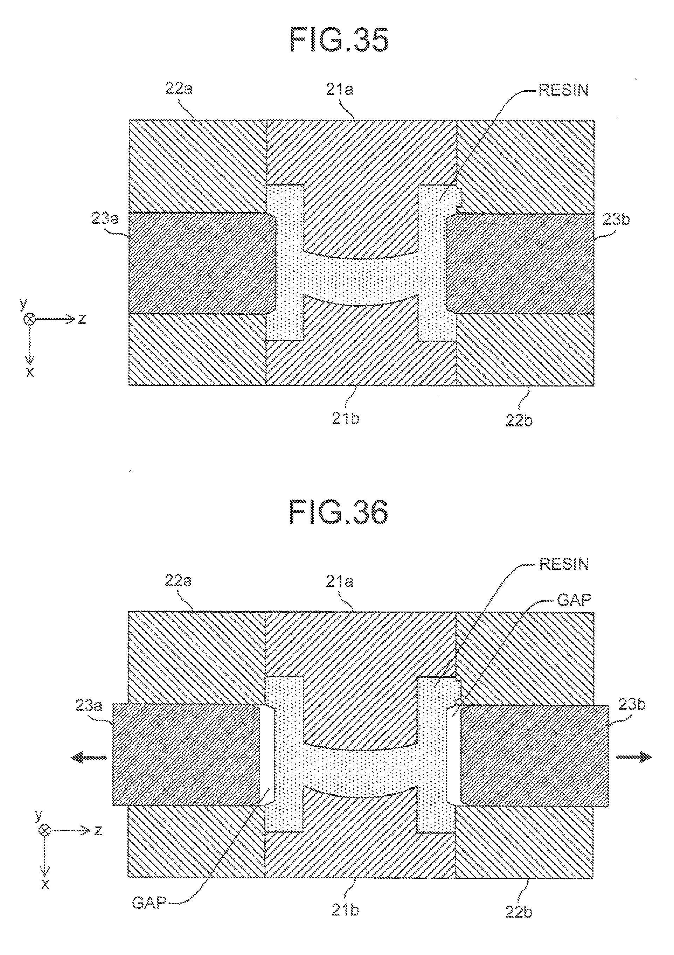

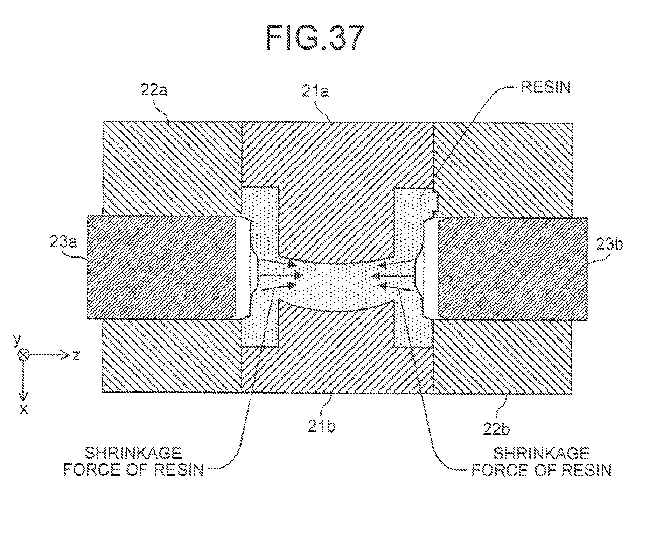

Next, a method of producing the imaging-side scanning lens 2107c using the metal mold 20 will be briefly explained.
(1) The metal mold 20 is set on an injection molding machine.
(2) A resin which is melted by being heated at a temperature (200 to 300°C) equal to or higher than the glass transition temperature (Tg) of the resin is injected, by applying pressure (100 to 600 kgf/cm²), to fill in the cavity of the metal mold 10 for which the temperature is maintained at a predetermined temperature (100 to 150°C) equal to or lower than the glass transition temperature (Tg) (see Fig. 35). Because the temperature of the resin approaches the temperature of the metal mold by being injected therein, the resin is cooled to shrink. And the pressure of the resin inside the cavity decreases with time.
(3) When the pressure of the resin inside the cavity reaches predetermined pressure, the movable interchangeable mold 23a is slid toward the -z side by a predetermined amount of about 1 to 5 mm, and the movable interchangeable mold 23b is slid toward the +z side by a predetermined of about 1 to 5 mm (see Fig. 36). In this way, a gap is formed between the movable interchangeable mold 23a and the resin, and another gap is formed between the movable interchangeable mold 23b and the resin. Moreover, the resin near each of the gaps is deformed in response to the predetermined pressure, whereby an imperfect transfer portion is formed (see Fig. 37).
(4) When the temperature of the resin is approximately equal to the temperature of the metal mold 20, the resin is taken out of the metal mold 20.

The imaging-side scanning lens 2107c thus produced has a shape such that the central portion of each of the side surfaces "a" and "b" is recessed due to shrinkage of the resin. However, it has been possible to form the attachment reference portions into a desired shape at a desired position without being affected by the shrinkage of the resin. It has also been possible to obtain the optical surface having a desired shape.

In this example, the imaging-side scanning lens 2107c, having a small thickness, has ribs having approximately the same thickness so as to suppress deformation due to an external force. In this case, in the metal mold 20, because the cooling speed of each transfer surface is fast, there is a concern that it is difficult to completely absorb the sink marks on the transfer surface only by the sink-mark induction as is used in the deflector-side scanning lens 2105c. Thus, the distal end of the movable interchangeable mold is configured to sink into the ribs so as to decrease the distance to the transfer surface, thereby to increase a sink-mark inducing effect. Moreover, by inducing sink marks in the two facing side surfaces (side surfaces "a" and "b"), the sink-mark inducing effect increases, and approximately the same cooling state is created for the ribs on the +z side and the -z side, whereby it is possible to suppress warpage after molding.

As above, the use of the metal mold 20 enables the sink marks to occur only in the front region of each movable interchangeable mold. That is, it is possible to realize low-pressure molding without the occurrence of sink marks on each transfer surface and each attachment reference position. Thus, it is possible to produce a lens formed of a resin which includes an optical surface having shape accuracy as demanded and which has low internal strain. Moreover, because the distal end of each movable interchangeable mold is configured to sink into the ribs, it is possible to obtain a sink-mark inducing effect while securing the thickness of the rib.

As described above, the optical scanning device 2010 according to the present embodiment includes four light sources (2200a, 2200b, 2200c, and 2200d), a pre-deflector optical system that guides light beams from the light sources to the polygon mirror 2104, the polygon mirror 2104, and the optical scanning system that collects the light beams deflected by the polygon mirror 2104 on the surface of the corresponding photosensitive element.

Moreover, the optical scanning system includes four deflector-side scanning lenses (2105a, 2105b, 2105c, and 2105d) and four imaging-side scanning lenses (2107a, 2107b, 2107c, and 2107d) corresponding to the respective light sources. Each deflector-side scanning lens is a molded resin product which is formed of a resin using the metal mold 10 by injection molding. Moreover, each imaging-side scanning lens is a molded resin product which is formed of a resin using the metal mold 20 by injection molding.

The metal mold 10 includes the two interchangeable molds (11a and 11b), the two side wall members (12a and 12b), and the movable interchangeable mold 13. Moreover, in the X-axis direction, the end portion of the movable interchangeable mold 13 on the -X side is positioned closer to the -X side than the cp1, and the end portion of the movable interchangeable mold 13 on the +X side is positioned closer to the +X side than the cp2. That is, when seen from the +Z direction, the resin filling in the cavity between the cp1 and the cp2 is covered by the movable interchangeable mold 13. In this case, it is possible to prevent the sink marks from occurring on each optical surface and each attachment reference portion. Therefore, it is possible to use a deflector-side scanning lens at a low cost, which has a desired shape and small birefringence.

The metal mold 20 includes the two interchangeable molds (21a and 21b), the two side wall members (22a and 22b), and the two movable interchangeable molds (23a and 23b). Moreover, in the x-axis direction, the end portion of each movable interchangeable mold on the - x side is positioned closer to the -x side than the cp3, and the end portion of each movable interchangeable mold on the +x side is positioned closer to the +x side than the cp4. That is, when seen from the -Z direction, the resin filling in the cavity between the cp3 and the cp4 is covered by each movable interchangeable mold. In this case, it is possible to prevent the sink marks from occurring on each optical surface and each attachment reference portion. Therefore, it is possible to use an imaging-side scanning lens at a low cost, which has a desired shape and small birefringence.

Therefore, the optical scanning device 2010 can be manufactured at a reduced cost without decreasing the scanning accuracy.

Moreover, the color printer 2000, according to the present embodiment, includes the optical scanning device 2010, enabling cost reduction without any decrease in the image quality.

In the embodiment above, although the description has been given to a case in which the optical scanning device includes four light sources, the present invention is not limited to this.

Moreover, in the embodiment above, although the description has been given to a case in which the image forming apparatus includes four photosensitive elements, the present invention is not limited to this, and the image forming apparatus may include, for example, two photosensitive elements. Furthermore, the image forming apparatus may include five or six photosensitive elements.

Moreover, in the above embodiment, the transfer of atoner image from the photosensitive element to a recording sheet may be performed by a direct transfer method in which the toner image is directly transferred from the photosensitive element to the recording sheet.

In addition, in the above embodiment, although the color printer 2000 has been described as an example of the image forming apparatus, the present invention is not limited to this; for example, the image forming apparatus may be an optical plotter or a digital copying machine.

Moreover, it is allowable to use an image forming apparatus that uses a silver halide film as an image carrier. In this case, the image forming apparatus forms a latent image on the silver halide film by using optical scanning. The latent image can be processed into a visible image by using the same process as a typical developing process for the silver halide photography. Moreover, the visible image can be transferred to printing paper, which is a transfer target material, in the same manner as a typical printing process for the silver halide photography. Such an image forming apparatus can be used as a photo plate maker or an optical lithography system that forms a computed tomography (CT)-scan image or the like.

Moreover, it is also allowable to use an image forming apparatus that uses a color-producing medium (positive photographic paper) which produces color in response to thermal energy of a beam spot as an image carrier. In this case, a visible image can be directly formed on an image carrier by using optical scanning.

In any case, an image forming apparatus that includes the optical scanning device 2010 may be used.

Moreover, an optical element used in an optical apparatus other than the optical scanning device may be produced using the metal mold similar to the above embodiment. In this case, it is possible to obtain an optical element having excellent shape accuracy and small birefringence at a low cost.

Moreover, a molded resin product other than the optical element may be produced using the metal mold similar to the above embodiment. In this case, it is possible to obtain a molded resin product having excellent shape accuracy at a low cost.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

The present application claims priority to and incorporates by reference the entire contents of Japanese Patent Application No. 2010-203943 filed in Japan on September 13, 2010.

## Claims

1. A resin casting mold (10; 20) that has a cavity having a predetermined shape and is used for producing a molded resin product by transferring the shape of the cavity to a resin material, the resin casting mold comprising:
a mold member (11a, 11b, 12a, 12b, 13; 21a, 21b, 22a, 22b, 23a, 23b) that form the cavity, wherein
the mold member (11a, 11b, 12a, 12b, 13; 21a, 21b, 22a, 22b, 23a, 23b) includes first to third surfaces on the cavity side, the first and second surfaces facing each other in a first direction (X) and each having a predetermined surface shape,
the mold member (11a, 11b, 12a, 12b, 13; 21a, 21b, 22a, 22b, 23a, 23b) includes an insert member (13; 23a, 23b) that forms a part of the third surface and that is slidable in a second direction (Z) perpendicular to the first direction,
at least one cross-sectional shape of the cavity satisfies a relation h < A < H where A is a length of the insert member (13; 23a, 23b) in the first direction, h is a spacing in the first direction between a portion of the first surface closest to the insert member (13; 23a, 23b) and a portion of the second surface closet to the insert member (13; 23a, 23b), and H is a length of the third surface in the first direction (X), and
the insert member (13; 23a, 23b) is disposed so as to include a region having the spacing h in the first direction (X).

2. The resin casting mold (10; 20) according to claim 1, wherein
the molded resin product is produced to have an attachment reference portion having a predetermined shape, and
the mold member (12b; 22b) includes a transfer surface corresponding to the attachment reference portion in a portion of the third surface other than a surface on the cavity side of the insert member (13; 23a, 23b).

3. The resin casting mold (20) according to claim 1 or 2, wherein
a surface of the insert member (23a, 23b) on the cavity side is a convex surface.

4. The resin casting mold (10; 20) according to any one of claims 1 to 3, wherein
the molded resin product is produced to have:
a body portion having two surfaces corresponding to the first and second surfaces; and
a reinforcing portion reinforcing the body portion, and
a surface of the insert member (13; 23a, 23b) on the cavity side is a surface that defines a part of a surface including the reinforcing portion when the cavity is filled with the resin material.

5. A molded resin product that is produced using the resin casting mold (10; 20) according to any one of claims 1 to 4.

6. The molded resin product according to claim 5, comprising:
a first molding surface to which the first surface of the resin casting mold (10; 20) is transferred;
a second molding surface to which the second surface of the resin casting mold (10; 20) is transferred; and
a third molding surface to which a part of the third surface of the resin casting mold (10; 20) is transferred and which includes an imperfect transfer portion, wherein
the imperfect transfer portion has a smaller area than the third molding surface,
in at least one cross-sectional shape, a portion of the first molding surface closest to the third molding surface and a portion of the second molding surface closest to the third molding surface are positioned between ends (cp1, cp2; cp3, cp4) of the imperfect transfer portion in a direction along which the first molding surface faces the second molding surface.

7. A molded resin product produced using a resin casting mold (10; 20) which includes a mold member 11a, 11b, 12a, 12b, 13; 21a, 21b, 22a, 22b, 23a, 23b) that forms a cavity including first and second surfaces facing each other in a first direction (X) and a third surface and which includes an insert member (13; 23a, 23b) that forms a part of the third surface and that is slidable in a second direction (Z) perpendicular to the first direction (X),
the molded resin product comprising:
a first molding surface to which the first surface of the resin casting mold (10; 20) is transferred;
a second molding surface to which the second surface of the resin casting mold (10; 20) is transferred; and
a third molding surface to which a part of the third surface of the resin casting mold (10; 20) is transferred and which includes an imperfect transfer portion, wherein
the imperfect transfer portion has a smaller area than the third molding surface,
in at least one cross-sectional shape, a portion of the first molding surface closest to the third molding surface and a portion of the second molding surface closest to the third molding surface are positioned between ends (cp1, cp2; cp3, cp4) of the imperfect transfer portion in a direction along which the first molding surface faces the second molding surface.

8. An optical element produced using the resin casting mold (10; 20) according to any one of claims 1 to 4.

9. The optical element according to claim 8, comprising:
a first molding surface to which the first surface of the resin casting mold (10; 20) is transferred;
a second molding surface to which the second surface of the resin casting mold (10; 20) is transferred; and
a third molding surface to which a part of the third surface of the resin casting mold (10;20) is transferred and which includes an imperfect transfer portion, wherein
the imperfect transfer portion has a smaller area than the third molding surface,
in at least one cross-sectional shape, a portion of the first molding surface closest to the third molding surface and a portion of the second molding surface closest to the third molding surface are positioned between ends (cp1, cp2; cp3, cp4) of the imperfect transfer portion in a direction along which the first molding surface faces the second molding surface.

10. An optical element produced using a resin casting mold (10; 20) which includes a mold member (11a, 11b, 12a, 12b, 13; 21a, 21b, 22a, 22b, 23a, 23b) that forms a cavity including first and second surfaces facing each other in a first direction (X) and a third surface and which includes an insert member (13; 23a, 23b) that forms a part of the third surface and that is slidable in a second direction (Z) perpendicular to the first direction (X), the optical element comprising:
a first molding surface to which the first surface of the resin casting mold (10; 20) is transferred;
a second molding surface to which the second surface of the resin casting mold (10; 20) is transferred; and
a third molding surface to which a part of the third surface of the resin casting mold (10; 20) is transferred and which includes an imperfect transfer portion, wherein
the imperfect transfer portion has a smaller area than the third molding surface,
in at least one cross-sectional shape, a portion of the first molding surface closest to the third molding surface and a portion of the second molding surface closest to the third molding surface are positioned between ends (cp1, cp2; cp3, cp4) of the imperfect transfer portion in a direction along which the first molding surface faces the second molding surface.

11. The optical element according to claim 9 or 10, comprising a body portion including a lens surface and a rib that reinforces the body portion, wherein
the third molding surface is a surface that includes the rib.

12. An optical scanning device that scans a surface to be scanned with light, comprising:
a light source;
a deflector that deflects light emitted from the light source; and
an optical system that includes the optical element according to any one of claims 8 to 11 and focuses light deflected by the deflector on the surface to be scanned.

13. An image forming apparatus comprising:
at least one image carrier; and
the optical scanning device, according to claim 12, which scans the at least one image carrier with light modulated based on image information.

14. The image forming apparatus according to claim 13, wherein
the image information is multicolor image information.

15. A method of molding a product, the method comprising using a mold according to any one of claims 1 to 4.
